# EUROPEAN PATENT APPLICATION

(11) **EP 4 750 121 A1**
(43) Date of publication of application: **27.05.2026**
(21) Application number: 23946076.9
(22) Date of filing: 21.07.2023
(51) Int. Cl.: H04W 24/02

(54) **PERFORMANCE EVALUATION METHOD, FIRST DEVICE, AND SECOND DEVICE**

(71) Applicant: GUANGDONG OPPO MOBILE TELECOMMUNICATIONS CORP., LTD., Dongguan, Guangdong 523860 (CN)
(72) Inventor: TIAN, Wenqiang, Dongguan, Guangdong 523860 (CN)
(74) Representative: Grassi, Stefano
(86) International application number: PCT/CN2023/108622
(87) International publication number: WO 2025/019980

(57) **Abstract**

The present application relates to a performance evaluation method, a first device, a second device, a chip, a computer-readable storage medium, a computer program product, a computer program, and a communication system. The performance evaluation method comprises: under a first condition, a first device uses a first evaluation mode corresponding to the first condition to evaluate the performance of a first scheme. According to the technical solution in embodiments of the present application, the evaluation performance can be improved and the evaluation overhead can be controlled.

## Description

### TECHNICAL FIELD

The present disclosure relates to the field of communication, and more specifically, to a method for performance evaluation, a first device, a second device, a chip, a computer-readable storage medium, a computer program product, a computer program, and a communication system.

### BACKGROUND

Communication systems often involve numerous wireless communication solutions, which require evaluation to enable management of these solutions, such as solution switching, updating or fallback. For a certain type of solution, a simple approach is to construct a corresponding evaluation mechanism to obtain an evaluation result, and then trigger subsequent corresponding procedures. It is necessary to consider how to improve evaluation performance and control evaluation overhead.

### SUMMARY

An embodiment of the present disclosure provides a method for performance evaluation, which includes the following operation.

A first device evaluates performance of a first solution under a first condition by using a first evaluation mode corresponding to the first condition.

An embodiment of the present disclosure provides a method for performance evaluation, which includes the following operation.

A second device transmits third indication information to a first device, where the third indication information is used to enable the first device to evaluate performance of a first solution under a first condition by using a first evaluation mode corresponding to the first condition.

An embodiment of the present disclosure provides a first device, which includes a first processing module.

The first processing module is configured to evaluate, under a first condition, performance of a first solution by using a first evaluation mode corresponding to the first condition.

An embodiment of the present disclosure provides a second device, which includes a third communication module.

The third communication module is configured to transmit third indication information to a first device, where the third indication information is used to enable the first device to evaluate performance of a first solution under a first condition by using a first evaluation mode corresponding to the first condition.

An embodiment of the present disclosure provides a first device, including: a transceiver, a processor and a memory. The memory is configured to store a computer program, the transceiver is configured to communicate with other devices, and the processor is configured to invoke and run the computer program stored in the memory, to cause the first device to perform the described method for performance evaluation.

An embodiment of the present disclosure provides a second device, including: a transceiver, a processor and a memory. The memory is configured to store a computer program, the transceiver is configured to communicate with other devices, and the processor is configured to invoke and run the computer program stored in the memory, to cause the second device to perform the described method for performance evaluation.

An embodiment of the present disclosure provides a chip, configured to implement the described method for performance evaluation.

Specifically, the chip includes: a processor, configured to invoke and run a computer program from a memory, causing a device having the chip installed therein executes the described method for performance evaluation.

An embodiment of the present disclosure provides a computer-readable storage medium, configured to store a computer program, which, when executed by a device, causes the device to perform the described method for performance evaluation.

An embodiment of the present disclosure provides a computer program product, including a computer program instruction, the computer program instruction causing a computer to perform the described method for performance evaluation.

An embodiment of the present disclosure provides a computer program, which, when run on a computer, causes the computer to perform the described method for performance evaluation.

An embodiment of the present disclosure provides a communication system, including a first device and a second device, configured to perform the described method for performance evaluation.

In the embodiments of the present disclosure, under the first condition, the first device uses the first evaluation mode corresponding to the first condition to evaluate the performance of the first solution, i.e., corresponding evaluation modes are used for different conditions. Because effects of different conditions on the evaluation of the first solution are taken into consideration, a more appropriate evaluation mode can be used to evaluate the first solution, thereby improving evaluation performance and controlling evaluation overhead.

### BRIEF DESCRIPTION OF THE DRAWINGS

FIG. 1 is a schematic diagram of a communication system according to an embodiment of the present disclosure.
FIG. 2A is a schematic diagram of an artificial intelligence-based Channel State Information (CSI) feedback solution in an embodiment of the present disclosure.
FIG. 2B is a schematic diagram of an artificial intelligence-based channel estimation solution in an embodiment of the present disclosure.
FIG. 2C is a schematic diagram of an artificial intelligence-based positioning solution in an embodiment of the present disclosure.
FIG. 2D is a schematic diagram of an artificial intelligence-based beam management solution in an embodiment of the present disclosure.
FIG. 3 is a schematic flowchart of a method for performance evaluation according to an embodiment of the present disclosure.
FIG. 4A is a schematic diagram of determining a first condition in an embodiment of the present disclosure.
FIG. 4B is a schematic diagram of determining a first evaluation mode in an embodiment of the present disclosure.
FIG. 4C is another schematic diagram of determining a first condition in an embodiment of the present disclosure.
FIG. 4D is another schematic diagram of determining a first evaluation mode in an embodiment of the present disclosure.
FIG. 5 is a schematic flowchart of a method for performance evaluation according to another embodiment of the present disclosure.
FIG. 6 is a schematic block diagram of a first device according to an embodiment of the present disclosure.
FIG. 7 is a schematic block diagram of a first device according to another embodiment of the present disclosure.
FIG. 8 is a schematic block diagram of a first device according to yet another embodiment of the present disclosure.
FIG. 9 is a schematic block diagram of a second device according to an embodiment of the present disclosure.
FIG. 10 is a schematic block diagram of a communication device according to an embodiment of the present disclosure.
FIG. 11 is a schematic block diagram of a chip according to an embodiment of the present disclosure.
FIG. 12 is a schematic block diagram of a communication system according to an embodiment of the present disclosure.

### DETAILED DESCRIPTION

The technical solutions in the embodiments of the present disclosure will be described below with reference to the drawings in the embodiments of the present disclosure.

The technical solutions of the embodiments of the present disclosure are applicable to various communication systems, such as a Long-Term Evolution (LTE) system, an Advanced Long-Term Evolution (LTE-A) system, a New Radio (NR) system, an evolved system of an NR system, an LTE-based access to Unlicensed spectrum (LTE-U) system, an NR-based access to Unlicensed spectrum (NR-U) system, a Non-Terrestrial Network (NTN) system, a Universal Mobile Telecommunication System (UMTS), a Wireless Local Area Network (WLAN), Wireless Fidelity (WiFi), a 5th-Generation (5G) communication system, or other communication systems.

Generally speaking, conventional communication systems support a limited number of connections and are easy to implement. However, with the development of communication technologies, mobile communication systems will not only support conventional communications, but also support, for example, Device to Device (D2D) communication, Machine to Machine (M2M) communication, Machine Type Communication (MTC), Vehicle to Vehicle (V2V) communication, and Vehicle to Everything (V2X) communication, etc. The embodiments of the present disclosure are also applicable to these communication systems.

In an implementation, a communication system in an embodiment of the present disclosure is applicable to a Carrier Aggregation (CA) scenario, a Dual Connectivity (DC) scenario, or a Standalone (SA) deployment scenario.

In an implementation, a communication system in an embodiment of the present disclosure may be applicable to an unlicensed spectrum, where the unlicensed spectrum may also be considered as a shared spectrum. Alternatively, the communication system in the embodiment of the present disclosure may also be applicable to a licensed spectrum, where the licensed spectrum may also be considered as an unshared spectrum.

The embodiments of the present disclosure describe various embodiments in conjunction with a network device and a terminal device, where the terminal device may also be referred to as a User Equipment (UE), an access terminal, a user unit, a user station, a mobile station, a mobile site, a remote station, a remote terminal, a mobile device, a user terminal, a terminal, a wireless communication device, a user agent, or a user apparatus, etc.

The terminal device may be a station (ST) in a WLAN, a cellular phone, a cordless phone, a Session Initiation Protocol (SIP) phone, a Wireless Local Loop (WLL) station, a Personal Digital Assistant (PDA) device, a handheld device having a wireless communication function, a computing device or another processing device connected to a wireless modem, a vehicle-mounted device, a wearable device, a terminal device in a next-generation communication system such as an NR network, or a terminal device in a future evolved Public Land Mobile Network (PLMN) network, etc.

In the embodiments of the present disclosure, the terminal device may be deployed on land, including an indoor or outdoor device, a handheld device, a wearable device, or a vehicle-mounted device; it may also be deployed on the surface of water (such as a ship, etc.); it may also be deployed in the air (e.g., on an airplane, a balloon, a satellite, etc.).

In the embodiments of the present disclosure, the terminal device may be a mobile phone, a tablet computer (Pad), a computer with a wireless transceiving function, a Virtual Reality (VR) terminal device, an Augmented Reality (AR) terminal device, a wireless terminal device in industrial control, a wireless terminal device in self-driving, a wireless terminal device in remote medical care, a wireless terminal device in a smart grid, a wireless terminal device in transportation safety, a wireless terminal device in a smart city, a wireless terminal device in a smart home, etc.

As an example rather than a limitation, in the embodiments of the present disclosure, the terminal device may also be a wearable device. The wearable device may also be referred to as a wearable smart device, and is a general term for wearable devices that are developed by intelligently designing daily wear applying a wearable technology, such as glasses, gloves, watches, clothes, and shoes. The wearable device is a portable device that is directly worn on the body or integrated into clothes or an accessory of a user. The wearable device is not only a hardware device, but also implements powerful functions by means of software support, data interaction, and cloud interaction. In a broad sense, wearable smart devices include those that are fully functional and large in size, and can implement complete or partial functions without dependence on smart phones, such as smart watches or smart glasses, and those that only focus on a certain type of application function and need to be used in cooperation with other devices such as smart phones, such as various smart bracelets, smart jewelry, etc., for monitoring physical signs.

In the embodiments of the present disclosure, the network device may be a device used to communicate with a mobile device, and the network device may be an Access Point (AP) in a WLAN, an Evolutional Node B (eNB or eNodeB) in LTE, a relay station or access point, a vehicle-mounted device, a wearable device, a network device (gNB) in an NR network, a network device in a future evolved PLMN network, or a network device in an NTN network, etc.

As an example rather than a limitation, in the embodiments of the present disclosure, the network device may have a mobile characteristic. For example, the network device may be a mobile device. Optionally, the network device may be a satellite or a balloon station. For example, the satellite may be a Low-Earth Orbit (LEO) satellite, a Medium-Earth Orbit (MEO) satellite, a Geostationary Earth Orbit (GEO) satellite, a High Elliptical Orbit (HEO) satellite, or the like. Optionally, the network device may also be a base station disposed on land, in water, etc.

In the embodiments of the present disclosure, the network device may serve a cell, and the terminal device communicates with the network device by means of a transmission resource (for example, a frequency domain resource or a spectrum resource) used by the cell. The cell may be a cell corresponding to the network device (for example, a base station). The cell may belong to a macro base station or a base station corresponding to a small cell. The small cell herein may include: a metro cell, a micro cell, a pico cell, a femto cell, etc. These small cells have the characteristics of small coverage and low transmit power, and are suitable for providing high-rate data transmission services.

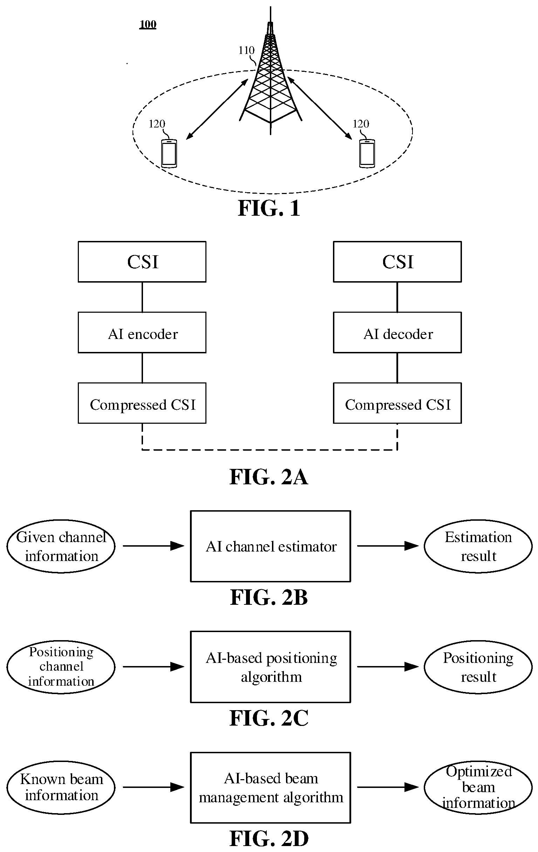

FIG. 1 illustratively shows a communication system 100. The communication system 100 includes a network device 110 and two terminal devices 120. In an implementation, the communication system 100 may include a plurality of network devices 110, and the coverage range of each network device 110 may include another number of terminal devices. The embodiments of the present disclosure are not limited thereto.

It should be understood that a device having a communication function in the network/system in the embodiments of the present disclosure may be referred to as a communication device. Using the communication system shown in FIG. 1 as an example, a communication device may include a network device and a terminal device having a communications function, and the network device and the terminal device may be specific devices in the embodiments of the present disclosure, and details are not described herein again. The communication device may further include another device in the communication system, such as a network controller, a mobility management entity, or another network entity, which is not limited by the embodiments of the present disclosure.

It is to be understood that the terms "system" and "network" are often used interchangeably herein. The term "and/or" herein is merely to describe associations between associated objects, indicating that there can be three kinds of relationships. For example, A and/or B, which may indicate three situations in which A exists alone, A and B exist simultaneously, or B exists alone. In addition, the character "/" herein generally indicates that associated objects preceding and following that character are in an "or" relationship.

It should be understood that "indication" mentioned in the embodiments of the present disclosure may be a direct indication or an indirect indication, or may also represent an association. For example, A indicating B may mean that A directly indicates B, for example, B may be obtained from A; it may also mean that A indirectly indicates B, for example, A indicates C, and B may be obtained from C; it may also mean that there is an association between A and B.

In the description of the embodiments of the present disclosure, the term "corresponding" may represent a direct correspondence or indirect correspondence between two objects, or may represent an association therebetween, or may be a relationship between indicating and being indicated and configuring and being configured, etc.

To facilitate understanding of the technical solutions of the embodiments of the present disclosure, the following describes the technical problems to be solved by the embodiments of the present disclosure by using an Artificial Intelligence (AI)-based wireless communication solution as an example. It should be understood that the AI-based wireless communication solution is an application example of the technical solutions of the embodiments of the present disclosure, and does not limit the scope of protection of the embodiments of the present disclosure, that is, the technical solutions of the embodiments of the present disclosure can also be applied to other wireless communication solutions.

### (I) AI-based wireless communication solutions

At present, AI-based solutions are increasingly being used in wireless communication systems. For example, as shown in FIG. 2A, CSI feedback is implemented based on artificial intelligence. By means of introduction of AI encoders and AI decoders, AI-based compressed feedback of CSI is implemented. For another example, as shown in FIG. 2B, a channel estimation issue is resolved based on AI. High-performance estimation of a given channel is implemented by means of AI channel estimators. For another example, as shown in FIG. 2C, a positioning issue is resolved based on AI. A high-precision positioning result is obtained by relying on positioning channel information by means of an AI-based positioning algorithm. For another example, as shown in FIG. 2D, a beam management issue is resolved based on AI. Using an AI-based beam management algorithm, based on known beam information, preferred or more refined beam information is obtained, or predictions of beam information at future moments are obtained.

### (II). Performance evaluation of AI/Machine Learning (ML) solutions

In current research, performance evaluation of AI/ML solutions is mainly defined based on reasoning performance of the AI/ML solutions. For example, for CSI compression and restoration solutions, CSI restoration accuracy that can be obtained by a specific AI/ML solution under specific compression feedback bit conditions can be used as a performance evaluation indicator for the solution. For example, a difference or similarity between ideal CSI information or to-be-compressed CSI information and CSI information obtained by means of compression and restoration is used as a performance evaluation indicator. For CSI prediction solutions, similar to the CSI compression and restoration solutions, achievable CSI prediction accuracy of a specific AI/ML solution can be used as a performance evaluation indicator for the solution. For example, a difference or similarity between ideal CSI information or target CSI information and predicted CSI information is used for evaluation. In the above solutions, the difference evaluation between items of CSI information is, for example, evaluation of Normalized Mean Square Error (NMSE) or Mean Squared Error (MSE) between the items of CSI information. The similarity evaluation between the items of CSI information is, for example, evaluation based on GCS or SGCS, etc.

For AI-based wireless communication solutions, current research has shown successive performance gains and effective results. However, it should be noted here that when these works are actually applied, it is also necessary to consider the performance assurance mechanisms of these solutions. For example, for AI/ML-based CSI feedback or prediction, AI/ML-based beam management, beam prediction, AI/ML-based positioning, AI/ML-based channel estimation, AI/ML-based mobility management, AI/ML-based resource management, AI/ML-based encoding and decoding, AI/ML-based modulation and demodulation, etc., in actual systems, it is necessary to trigger a corresponding model management process, such as solution switching, updating and fallback, by means of evaluation of model performance.

In the above evaluation process, for a certain type of solution, a simple approach is to construct a corresponding evaluation mechanism, such as an evaluation window, to obtain a stable evaluation result through multiple evaluations, and then trigger subsequent corresponding procedures. However, it should be noted herein that if a fixed evaluation mode (such as the evaluation window, or evaluation samples) is used under different usage conditions, there will be problems such as excessive evaluation overhead (resource overhead, or time overhead) or poor evaluation performance. For example, for CSI compression and restoration solutions, if an evaluation mode used in a high-speed scenario is the same as an evaluation mode used in a low-speed scenario, or an evaluation mode used in a scenario with a relatively stable channel environment is the same as an evaluation mode used in a scenario with a relatively complex and changing environment, it may result in excessive evaluation overhead or poor evaluation performance.

The technical solutions of the embodiments of the present disclosure are mainly intended to solve the described problems.

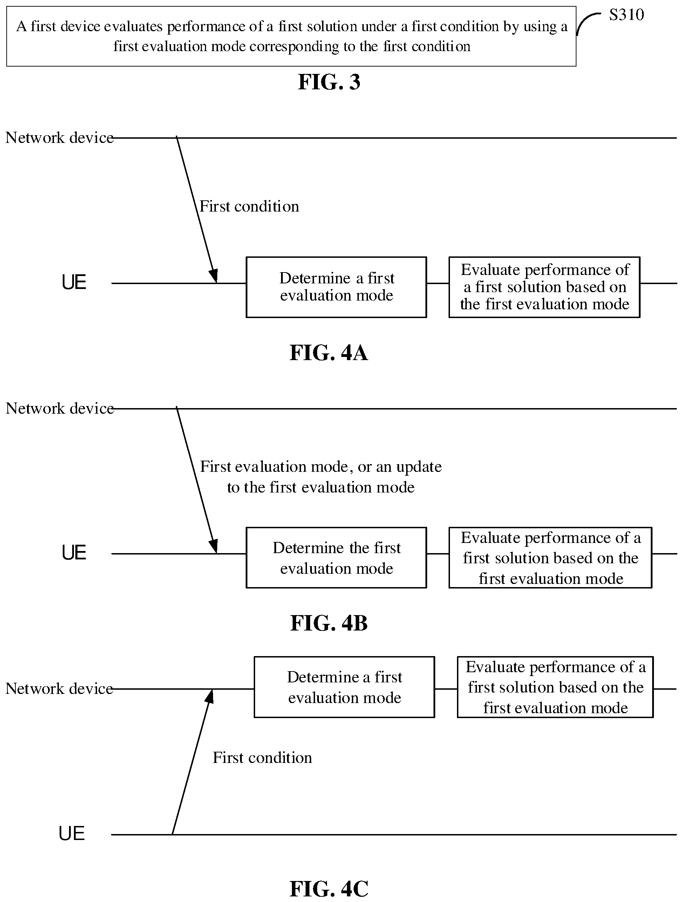

FIG. 3 is a schematic flowchart of a method for performance evaluation according to an embodiment of the present disclosure. This method can optionally be applied to the system shown in FIG. 1, but is not limited thereto. The method includes at least some of the following contents.

S310: A first device evaluates performance of a first solution under a first condition by using a first evaluation mode corresponding to the first condition.

Exemplarily, the first condition may be a condition that affects a performance evaluation effect of the first solution. For example, the first condition may be a condition used to represent a scenario environment in which the first solution is used. Because the same evaluation mode has different effects on the evaluation of the first solution in different scenario environments, the first condition is set such that the first device can determine a specific scenario environment based on the first condition, thereby using a specific evaluation mode to evaluate the performance of the first solution.

Similarly, under a second condition, the first device evaluates performance of the first solution using a second evaluation mode corresponding to the second condition, that is, different evaluation modes may correspond to different conditions. In other words, the first device may adjust an evaluation mode of the first solution according to different conditions.

Exemplarily, the first device may include a network device or a terminal device.

Exemplarily, the first solution may include any wireless communication solution, such as a CSI feedback solution, a beam management solution, a positioning solution, a channel estimation solution, a mobility management solution, a resource management solution, an encoding and decoding solution, a modulation and demodulation solution, etc. in a wireless communication system.

Exemplarily, the first evaluation mode may be an evaluation mechanism formed based on one or more types of information such as an evaluation window, a number of evaluation samples, a length of evaluation time, and an evaluation type.

For example, for a CSI feedback solution, the first evaluation mode may be to collect K pieces of CSI feedback information within an evaluation time of length L in a first evaluation window, and evaluate the CSI feedback solution based on a difference between each piece of CSI feedback information in the K pieces of CSI feedback information and the corresponding ideal CSI, K being an integer greater than or equal to 1, and L being a positive number. It can be seen that the first evaluation mode in this example is an evaluation mechanism formed based on the first evaluation window, the number K of evaluation samples and the length L of evaluation time, and the evaluation type is based on difference comparison.

Exemplarily, evaluating the performance of the first solution may include determining whether a processing result of the first solution meets a requirement, for example, determining a performance evaluation index based on the processing result of the first solution, and determining whether the performance evaluation index is greater than a threshold or less than a threshold, etc.

According to the method for performance evaluation of the above embodiment, under the first condition, the first device evaluates the performance of the first solution by using the first evaluation mode corresponding to the first condition, that is, corresponding evaluation modes are used for different conditions. Because effects of different conditions on the evaluation of the first solution are taken into consideration, a more appropriate evaluation mode can be used to evaluate the first solution, thereby improving evaluation performance and controlling evaluation overhead.

In some embodiments, the first solution includes an AI-based wireless communication solution. Optionally, the first solution may include an ML-based wireless communication solution. Because AI/ML models achieve good performance in familiar scenarios (i.e., scenarios encountered during a training stage or similar scenarios), but may perform poorly in unfamiliar scenarios, performance evaluation of AI/ML-based wireless communication solutions is particularly important. On the basis of the described embodiments, the accuracy of performance evaluation of AI/ML-based wireless communication solutions can be improved, so that the AI/ML solutions can be properly applied, and AI/ML capabilities can be fully utilized to improve performance of wireless communication systems.

In some embodiments, the first solution includes at least one of:
A CSI feedback solution;
A CSI prediction solution;
A beam management solution;
A beam prediction solution;
A positioning solution;
A channel estimation solution;
A mobility management solution;
A resource management solution;
An encoding and decoding solution; and
A modulation and demodulation solution.

Exemplarily, the first solution may include an alternative to conventional wireless communication solutions, which is implemented based on AI/ML. For example, the first solution may include an AI/ML-based CSI feedback solution, an AI/ML-based beam management solution, an AI/ML-based positioning solution, an AI/ML-based channel estimation solution, an AI/ML-based mobility management solution, an AI/ML-based resource management solution, an AI/ML-based encoding and decoding solution, or an AI/ML-based modulation and demodulation solution, etc.

Exemplarily, the first solution may include a solution for performing information prediction based on AI/ML to assist in communication decision-making, for example, an AI/ML-based CSI prediction solution, a beam prediction solution, or a service change prediction solution.

It can be understood that in practical applications, the first solution may also include two or more solutions. For example, the first evaluation mode is to evaluate the first solution based on a reference signal measurement result in a first time window. The first solution may include an AI/ML-based CSI feedback solution and a beam management solution. That is, under the first condition (for example, the same scenario environment), the CSI feedback solution and the beam management solution are both evaluated based on reference signal measurement results in the first time window. During specific implementation, specific content of the first solution may be set according to actual scenario requirements, solution characteristics, or system/protocol agreements, which are not enumerated herein.

In some embodiments, the first condition is related to at least one of the following types of information A to G.

### A. Scenario environment of the first solution

Exemplarily, the scenario environment may be determined based on one or more types of information including channel complexity, channel variation, frequency selection status, multipath status, a cell where the first device is located, and a usage scope of the solution. That is to say, different scenario environments in which the first solution is used due to conditions such as channel complexity, channel variation, frequency selection status, multipath status, and other environmental and scenario information, as well as different cells and different usage scopes of the first solution can serve as the first condition or one of elements of the first condition.

For example, the first condition may include determining, based on a preset rule, that the channel complexity is high and/or the channel variation is high. For another example, the first condition may include determining, based on a preset rule, that the channel complexity is low and/or the channel variation is high.

### B. Configuration information of a first measurement behavior, where the first measurement behavior is used to evaluate the first solution.

Specifically, for a first solution that requires performing a measurement action (e.g., measuring a specific signal or extracting specific information by means of measurement) to complete performance evaluation, the first condition may be set to be related to configuration information of a first measurement behavior used to evaluate the first solution. For example, when the first solution is an AI-based use case for CSI compression, restoration and prediction, the performance evaluation of the first solution requires a CSI measurement-related measurement, such as a Channel State Information Reference Signal (CSI-RS)-based measurement. When the first solution is used for a use case such as AI-based beam management, the performance evaluation of the first solution requires a measurement related to beam measurement. When the first solution is an AI-based positioning solution, the performance evaluation of the first solution requires a positioning-related measurement, such as a Positioning Reference Signal (PRS)-based measurement and a CSI-RS-based measurement.

Exemplarily, the configuration information of the first measurement behavior may include one or more of a number, a period, a time domain density, a frequency domain density, an interval, a number of ports, a number of beams, and a number of reference sites of a measurement reference signal. That is to say, for a specific first solution, different measurements will have effects on measurement accuracy due to differences in measuring reference signals, such as different configurations of a number of reference signals, period, time domain density, frequency domain density, interval, a number of ports, a number of beams, a number of reference sites, etc. The described different measurement configurations or different measurement accuracy can be used as the first condition or one of elements of the first condition.

For example, the first condition may include the number of reference signals, period, time domain density, frequency domain density, interval, a number of ports, a number of beams, or a number of reference sites being greater than a preset threshold or less than a preset threshold, etc.

### C. Measurement occasion corresponding to the first measurement behavior

Here, the measurement occasion corresponding to the first measurement behavior refers to a measurement occasion available for the first measurement behavior. Specifically, if execution of the first measurement behavior requires a measurement occasion, the first condition may also be set to be related to a measurement occasion that is available for the first measurement occasion.

Exemplarily, the measurement occasion corresponding to the first measurement behavior may include a measurement window and/or a measurement interval (Gap) of a reference signal, where the measurement window of the reference signal includes a measurement window of an SSB (e.g., SMTC), a measurement window of a CSI-RS, a measurement window of a PRS, a measurement window of a DMRS, etc. Alternatively, the measurement occasion corresponding to the first measurement behavior may include whether the first measurement behavior conflicts with other measurements, whether Listen Before Talk (LBT) is successful (affecting transmission or reception of a measurement signal of the first measurement behavior), and a capability of the first device to process the first measurement behavior.

That is to say, due to an effect of the measurement window of the reference signal on the first measurement behavior used for the performance evaluation of the first solution, an effect of a measurement gap on the first measurement behavior, an effect of whether the first measurement behavior conflicts with other measurements on the first measurement behavior, an effect of success or failure of LBT on the first measurement behavior, an effect of the measurement processing capability of the first device, etc., a difference in available measurement occasions can be used as the first condition or one of elements of the first condition.

For example, the first condition may include that the size of the measurement window of the reference signal is greater than a preset threshold, or the first measurement behavior does not conflict with other measurements, or the first condition may include that LBT is successful, etc.

### D. Movement speed of a terminal device related to the first solution

Exemplarily, the terminal device related to the first solution may be the first device, or may be another device other than the first device. For example, if the first device is a terminal device, the first condition may be related to a movement speed of the terminal device. For another example, if the first device is a network device, the first condition may be related to a movement speed of a terminal device scheduled by the network device.

Exemplarily, the movement speed may be represented by a movement speed level, such as a level corresponding to ultra-high speed, high speed, medium speed, low speed, etc., which may be used as the first condition or one of elements of the first condition.

For example, the first condition may include that the movement speed of the terminal device is greater than a preset threshold or less than a preset threshold, etc.

### E. Processing capability of the first device

Exemplarily, the processing capability may include an AI/ML processing capability of the first device or a capability of the first device to process information to be evaluated (such as measurement result processing, evaluation data acquisition, evaluation result calculation, etc.).

That is to say, if there is a difference in the AI/ML processing capability of the first device, or the capability of the first device to process the information to be evaluated, the different capabilities will affect an evaluation window size, length, etc. involved in the evaluation solution. Therefore, the difference in processing capability may be used as the first condition or one of elements of the first condition.

For example, the first condition may include determining, based on a preset rule, whether an AL/ML model processing capability of the first device is strong or weak.

### F. Single evaluation accuracy of the first solution by the first device.

For the evaluation of the first solution, even if the same issue is evaluated using the same evaluation mode, there will be a problem of different single evaluation accuracies in different scenarios, different devices, different data, and different models. For example, for evaluation of CSI feedback, single evaluation accuracy of device 1 is 90% reliable, and single evaluation accuracy of device 2 is 80% reliable. The difference in single evaluation accuracy may be used as the first condition or one of elements of the first condition.

For example, the first condition may include that the single evaluation accuracy of the first solution by the first device is greater than a preset threshold or less than a preset threshold, etc.

### G. Evaluation type of the first solution

Exemplarily, the evaluation type may include an evaluation based on label comparison, an evaluation based on feature statistics of input information/output information, an evaluation based on distribution statistics of input information/output information, an evaluation based on equivalent substitution model, etc.

Different evaluation types will affect evaluation effects of the same evaluation mode. Therefore, the difference in evaluation type may be used as the first condition or one of elements of the first condition.

For example, the first condition may include that the evaluation type of the first solution is an evaluation based on label comparison. Alternatively, the first condition may include that the evaluation type of the first solution is an evaluation based on feature statistics of input information.

It can be understood that in actual applications, the first condition may also be related to two or more types of the information mentioned above. For example, the first condition is to determine, based on a preset rule, that the channel complexity is high and the movement speed of the terminal device is greater than a preset threshold. For another example, the first condition is that the first measurement behavior does not conflict with other measurements and the movement speed of the terminal device is less than a preset threshold. During specific implementation, specific content of the first condition may be set according to actual scenario requirements, solution characteristics, or system/protocol agreements, which will not be enumerated herein.

In some embodiments, the first condition corresponds to first information of the first evaluation mode. That is, the first condition corresponds to the first evaluation mode, which means that the first condition corresponds to specific first information and thus corresponds to the first evaluation mode. That is, different conditions correspond to different first information, and thus correspond to different evaluation modes.

In some embodiments, the first information includes at least one of:
An evaluation type;
A size of an evaluation window;
A number of evaluation samples; and
A length of an evaluation time.

In other words, different evaluation modes may refer to one or more differences such as different types of evaluation, different sizes of evaluation window, different numbers of evaluation samples, and different lengths of evaluation time.

For example, assuming that the first information includes the evaluation type and the size of an evaluation window, then the first condition may correspond to an evaluation mechanism based on label comparison within an evaluation window of length L, and other conditions such as the second condition may correspond to an evaluation mechanism based on label comparison within an evaluation window of length L1, or the second condition may correspond to an evaluation mechanism based on distribution statistics within an evaluation window of length L1.

For another example, assuming that the first information includes the size of evaluation window and the number of evaluation samples, the first condition may correspond to an evaluation mechanism with a number of samples of K within an evaluation window of length L, and the second condition may correspond to an evaluation mechanism with a number of samples of K1 within an evaluation window of length L1.

From the above examples, it can be seen that the first information may include any one or more of the types of information described above. During specific implementation, the specific content of the first information may be set according to actual scenario requirements, solution characteristics, or system/protocol agreements, which are not enumerated herein.

In some embodiments, the first condition may directly correspond to a set first information value, or different conditions may correspond to different first information values. For example, the first condition corresponds to an evaluation window size of 1 millisecond (ms), and the second condition corresponds to an evaluation window size of 2 ms. In other words, in some embodiments, adjusting the evaluation mode based on different conditions may refer to directly adjusting the first information in the evaluation mode.

In some embodiments, the first condition may correspond to a manner of adjusting the first information, or different conditions may correspond to different manners of adjusting the first information. Specifically, the first information of the first evaluation mode is obtained by adjusting first information of a second evaluation mode based on the first condition. That is to say, adjusting the evaluation mode based on different conditions may be adjusting, on the basis of a defined, configured, or currently used second evaluation mode, the first information of the second evaluation mode according to the first condition, to obtain the first information of the first evaluation mode corresponding to the first condition.

In some embodiments, the first information of the first evaluation mode is obtained by adjusting the first information of the second evaluation mode based on a scaling factor or a correction coefficient corresponding to the first condition. That is to say, the first condition corresponds to the specific scaling factor or correction coefficient, and thus corresponds to a specific adjustment mode, so that the first information of the second evaluation mode can be adjusted according to the specific scaling factor or correction coefficient on the basis of the second evaluation mode, to obtain the first information of the first evaluation mode corresponding to the first condition.

Based on the above embodiments of the first solution, the first condition, the first evaluation mode, and the associations between different first conditions and the first evaluation mode, some application examples are provided below. It should be noted that only some examples are provided herein. Effects of different first conditions on evaluation modes in more different first solutions are not completely enumerated and elaborated. However, in actual operation, the effects of the different first conditions on the different first evaluation modes can be applied to performance evaluation of the different solutions.

### Application Example 1

For different environments and scenarios, for example, in environments and scenarios having high channel complexity, rapid variations, strong frequency selection status, and rich multipath characteristics, a larger evaluation window, longer evaluation time, or more evaluation samples can be adjusted and updated. For example, in environments and scenarios having low channel complexity, slow variations, weak frequency selection status, and undiversified multipath characteristics, a smaller evaluation window, shorter evaluation time, or less evaluation samples can be adjusted and updated.

Specifically, for example, when the first solution is an AI/ML-based CSI feedback solution, under the first condition (e.g., a first scenario, such as unstable channel variations and a complex environment), the first device expands an evaluation window by changing a window length from L to L1, or increases a length of L2 based on the given evaluation window length L, or performs extension by a scaling factor k based on the given evaluation window L, to obtain a new evaluation window L*(1+k), k being greater than or equal to 0, or performs extension by a scaling factor m based on the given evaluation window L, to obtain a new evaluation window L*m, m being greater than 1. Performance of the AI/ML-based CSI feedback solution is evaluated based on the extended evaluation window.

Alternatively, when the first solution is an AI/ML-based CSI feedback solution, under the first condition (e.g., a second scenario, such as stable channel variations and a relatively simple environment), the first device reduces the evaluation window by changing the window length from L to L3, or reduces a length of L4 based on the given evaluation window length L, or performs extension by a scaling factor k based on the given evaluation window L, to obtain a new evaluation window L*(1-k), k being greater than or equal to 0 and less than 1, or performs extension by a scaling factor m based on the given evaluation window L, to obtain a new evaluation window L*m, m being less than 1.

### Application Example 2

For different measurement configurations and measurement accuracy, for example, if the measurement accuracy is high, fewer evaluation samples, or a shorter evaluation time, or a shorter evaluation window may be used in the first evaluation solution. On the contrary, if the measurement accuracy is low, it is necessary to use more evaluation samples, or a longer evaluation time, or a longer evaluation window in the first evaluation solution.

Specifically, for example, when the first solution is an AI/ML-based beam management solution (such as beam prediction), under the first condition (for example, measurement accuracy for a CSI-RS or other reference signals is relatively low, e.g., due to a small number of measurement reference signals, a low time domain density, a low frequency domain density, a small number of ports, a small number of beams, and other configuration differences, or due to a limited measurement capability of the first device itself, resulting in low measurement accuracy), the first device increases the number of evaluation samples by adding a number N1 of samples on the basis of a given number of evaluation samples N, or performs extension by a scaling factor k based on the given number of evaluation samples N, to obtain a new evaluation sample size N*(1+k), k being greater than or equal to 0, or performs extension by a scaling factor m based on the given evaluation sample size N, to obtain a new evaluation sample size N*m, m being greater than 1. Performance of the AI/ML-based beam management solution is evaluated based on the extended evaluation sample size.

Alternatively, when the first solution is an AI/ML-based beam management solution (e.g., beam prediction), under the first condition (e.g., the measurement accuracy for the CSI-RS or other reference signals is high, for example, due to a large number of measurement reference signals, a high time domain density, a high frequency domain density, a large number of ports, a large number of beams, and other configuration differences, or due to a strong measurement capability of the first device itself, resulting in high measurement accuracy), the first device may reduce the number of evaluation samples, reducing a number N2 of samples based on the given number of evaluation samples N, or perform extension by a scaling factor k based on the given number of evaluation samples N, to obtain a new evaluation sample size N*(1-k), k being less than 1 and greater than or equal to 0, or perform extension by a scaling factor m based on the given evaluation sample size N, to obtain a new evaluation sample size N*m, m being less than 1. This is used for performance evaluation of the AI/ML-based beam management solution.

### Application Example 3

For different measurement occasions, for example, if there are fewer measurement occasions, a longer evaluation time, a longer evaluation window, and a lower evaluation credibility need to be used in the first evaluation solution. On the contrary, if there are more measurement occasions, a shorter evaluation time and a shorter evaluation window may be used in the first evaluation solution.

Specifically, for example, when the first solution is an AI/ML-based solution such as CSI feedback, beam management, channel estimation and positioning, corresponding SSB, CSI-RS, PT-RS, DMRS, PRS and other measurements need to be performed when the performance evaluation of the first solution is performed. Under the first condition (measurement of a reference signal used for the performance evaluation of the first solution conflicts with other measurement behaviors (such as mobility measurement, measurement of a different task, or measurement of a different reference signal), or measurement configuration (such as SMTC, measurement GAP, etc.)), the first device increases the evaluation time, or increases the number of evaluation samples, or increases the evaluation window. A method used is to add a length of L1 based on a given evaluation window length (or duration) L, or perform extension by a scaling factor k based on the given evaluation window L, to obtain a new evaluation window L*(1+k), k being greater than or equal to 0, or perform extension by a scaling factor m based on the given evaluation window L, to obtain a new evaluation window L*m, m being greater than 1. This is used for performance evaluation of the AI/ML-based solution such as CSI feedback, beam management, channel estimation, and positioning.

Another approach is to increase a sample size by N1 based on the given number of evaluation samples N, or perform extension by a scaling factor k based on the given number of evaluation samples N, to obtain a new evaluation sample size N*(1+k), k being greater than or equal to 0, or perform extension by a scaling factor m based on the given evaluation sample size N, to obtain a new evaluation sample size N*m, m being greater than 1. Performance evaluation of the AI/ML-based solution such as CSI feedback, beam management, channel estimation, and positioning is performed based on the extended evaluation window or evaluation sample size.

### Application Example 4:

For different single evaluation accuracies, for example, if the single evaluation accuracy is low, more evaluation samples, a longer evaluation time or a longer evaluation window may be used in the first evaluation solution. On the contrary, if the single evaluation accuracy is higher, fewer evaluation samples, a shorter evaluation time or a shorter evaluation window may be used in the first evaluation solution.

Specifically, for example, when the first solution is an AI/ML-based positioning solution, under the first condition (for example, single evaluation accuracy of a first AI positioning model is low, e.g., due to a high probability of a large positioning error), the first device may increase the number of evaluation samples by adding a number N1 of samples based on a given number of evaluation samples N. This is used for performance evaluation of the AI/ML-based positioning solution.

Alternatively, when the first solution is an AI/ML-based positioning solution, under the first condition (e.g., due to high single evaluation accuracy of the first AI positioning model, such as a low probability of a large positioning error), the first device may reduce the number of evaluation samples by a number N1 of samples based on the given number of evaluation samples N. This is used for performance evaluation of the AI/ML-based positioning solution.

### Application Example 5:

For different speed information, for example, from the perspective of a degree of scenario change caused by speed, such as a high speed causes the scenario to change quickly, and a low speed causes the scenario to change slowly, the high speed requires the use of more evaluation samples, or a longer evaluation time, and a longer evaluation window in the first evaluation solution to obtain accurate evaluation results. For low-speed scenarios, the first evaluation solution may use fewer evaluation samples, or a shorter evaluation time or a shorter evaluation window.

Specifically, for example, when the first solution is an AI/ML-based solution such as CSI feedback, beam management, and channel estimation, under the first condition (e.g., a UE is moving at a high speed), the first device may increase the number of evaluation samples by adding a number N1 of samples based on a given number of evaluation samples N, or adjust an evaluation window W to an evaluation window W1, W1 being larger than W. This is used for performance evaluation of the AI/ML-based solution such as CSI feedback, beam management, channel estimation, etc.

Alternatively, when the first solution is an AI/ML-based solution such as CSI feedback, beam management, or channel estimation, under the first condition (e.g., a UE is moving at a low speed), the first device may reduce the number of evaluation samples by a number N2 of samples based on the given number of evaluation samples N, or adjust the evaluation window W to an evaluation window W2, W2 being smaller than W. This is used for performance evaluation of the AI/ML-based solution such as CSI feedback, beam management, channel estimation, etc.

### Application Example 6:

For different speed information, for example, from the perspective of real-time requirements for solution updates caused by speed, e.g., high speeds lead to rapid scenario changes, and there is a strong demand for rapid solution update, and low speeds lead to slow scenario changes, and there is a weak demand for rapid solution update. Therefore, high-speed scenarios may use fewer evaluation samples, a shorter evaluation time or a shorter evaluation window in the first evaluation solution. On the contrary, at low speeds, more evaluation samples, a longer evaluation time or a longer evaluation window may be used in the first evaluation solution.

Specifically, for example, when the first solution is an AI/ML-based solution such as CSI feedback, beam management, and channel estimation, under the first condition (e.g., a UE is moving at a high speed), the first device may reduce the number of evaluation samples by a number N2 of samples based on a given number of evaluation samples N, or adjust the evaluation window W to an evaluation window W2, W2 being smaller than W. This is used for performance evaluation of the AI/ML-based solution such as CSI feedback, beam management, channel estimation, etc.

Alternatively, when the first solution is an AI/ML-based solution such as CSI feedback, beam management, and channel estimation, under the first condition (e.g., a UE is moving at a low speed), the first device may increase the number of evaluation samples by adding a number N1 of samples based on the given number of evaluation samples N, or adjust an evaluation window W to an evaluation window W1, W1 being larger than W. This is used for performance evaluation of the AI/ML-based solution such as CSI feedback, beam management, channel estimation, etc.

### Application Example 7:

According to different device processing capabilities, for example, if a UE has a stronger capability, fewer evaluation samples, a shorter evaluation time or a shorter evaluation window may be used in the first evaluation solution. On the contrary, if the UE has a weaker capability, more evaluation samples, a longer evaluation time or a longer evaluation window may be used in the first evaluation solution.

Specifically, for example, when the first solution is an AI/ML-based solution such as CSI feedback, beam management, channel estimation, positioning, encoding and decoding, and modulation and demodulation, under the first condition (for example, a UE has a strong performance evaluation capability, e.g., the UE has a model that can be used for performance evaluation, and the model has a good performance evaluation capability), the first device may reduce the number of evaluation samples by a number N1 of samples based on a given number of evaluation samples N, or adjust an evaluation window W to an evaluation window W1, W1 being smaller than W. This is used for performance evaluation of the AI/ML-based solution such as CSI feedback, beam management, channel estimation, positioning, encoding and decoding, modulation and demodulation, etc.

Alternatively, when the first solution is an AI/ML-based solution such as CSI feedback, beam management, channel estimation, positioning, encoding and decoding, and modulation and demodulation, under the first condition (for example, the UE does not have a strong performance evaluation capability), the first device needs to increase the number of evaluation samples by adding a number N2 of samples on the basis of the given number of evaluation samples N, or adjust the evaluation window W to an evaluation window W2, W2 being larger than W. This is used for performance evaluation of the AI/ML-based solution such as CSI feedback, beam management, channel estimation, positioning, encoding and decoding, modulation and demodulation, etc.

Different implementations are provided below for the configuration of the first condition and the first evaluation mode.

In some embodiments, the method for performance evaluation further includes: the first device receiving first indication information from a second device, where the first indication information indicates the first condition or indicates that the first condition is met.

Exemplarily, the second device may transmit first indication information to the first device to indicate specific content of the first condition corresponding to the first evaluation mode, such that the first device may determine whether the first condition is met to use the first evaluation mode under the first condition. Alternatively, the second device may determine whether a second condition is met. If the second device determines that the first condition is met, the second device transmits the first indication information to the first device, such that the first device uses the first evaluation mode under the currently met first condition.

In some embodiments, if the first device is a terminal device and the second device is a network device, the first indication information may be carried by a broadcast message, a Master Information Block (MIB), a System Information Block (SIB), a downlink message in an initial access, Downlink Control Information (DCI), a MAC Control Element (MAC CE), a Radio Resource Control (RRC) message, or an RRC reconfiguration message.

In some embodiments, if the first device is a network device and the second device is a terminal device, the first indication information may be carried by an uplink message in an initial access, UE capability reporting, Uplink Control Information (UCI), or an RRC message.

In some embodiments, the method for performance evaluation may further include: the first device determining the first condition based on a first rule. Optionally, the first rule is a preconfigured rule for determining the first condition.

In some embodiments, the first device includes a first terminal device, and the first rule is pre-agreed, or is configured by a first network device. In some other embodiments, the first device includes a first network device, and the first rule is pre-agreed.

In some embodiments, the method for performance evaluation may further include: the first device receiving second indication information from the second device, where the second indication information indicates the first evaluation mode. That is, the first evaluation mode is determined by the second device and indicated to the first device.

It should be noted that the second indication information being used to indicate the first evaluation mode herein may be that when the second device determines that the first condition is met, the second device transmits the second indication information to the first device to indicate the currently used first evaluation mode. Alternatively, the second device may transmit the second indication information to the first device to indicate the first evaluation mode corresponding to the first condition, and the first device may determine whether to currently use the first evaluation mode according to a current condition.

In some embodiments, if the first device is a terminal device and the second device is a network device, the second indication information may be carried by a broadcast message, an MIB, an SIB, a downlink message in an initial access, DCI, a MAC CE, an RRC message, or an RRC reconfiguration message.

In some embodiments, if the first device is a network device and the second device is a terminal device, the second indication information may be carried by an uplink message in an initial access, UE capability reporting, UCI, or an RRC message.

In some embodiments, the method for performance evaluation may further include: the first device determining the first evaluation mode based on a second rule. Optionally, the second rule is a preconfigured rule for determining the first evaluation mode.

In some embodiments, the first device includes a second terminal device, and the second rule is pre-agreed, or configured by a second network device. In some other embodiments, the first device includes a second network device, and the second rule is pre-agreed.

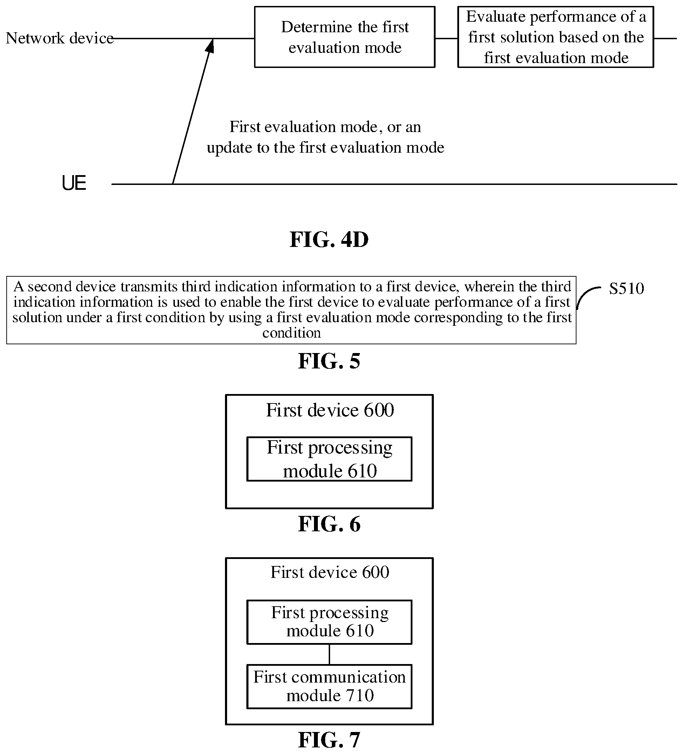

During specific implementation, any of the above embodiments may be selected or combined according to actual needs. The following describes a manner for determining the first condition and a manner for determining the first evaluation mode from the perspective of interaction between the terminal device and the network device. Specifically, the manner for determining the first condition and/or the manner for determining the first evaluation mode may include one or more of the following manners:
Manner 1: As shown in FIG. 4A, in this manner, the performance evaluation of the first solution is implemented on a UE side, and the first condition is indicated to the UE by a network device, for example, by means of broadcast, an MIB, an SIB, a downlink message in an initial access, DCI, a MAC CE, an RRC message, an RRC reconfiguration message, etc. to indicate current first condition information of the UE.
Manner 2: In this manner, the performance evaluation of the first solution is implemented on a UE side, and the first condition is determined by the UE, for example, by means of a protocol agreement, or based on a first condition determination rule preconfigured by a network.
Manner 3: As shown in FIG. 4B, in this manner, the performance evaluation of the first solution is implemented on a UE side, and a network instructs the UE to use the first evaluation mode, for example, by means of broadcast, an MIB, an SIB, a downlink message in an initial access, DCI, a MAC CE, an RRC message, an RRC reconfiguration message, etc.
Manner 4: In this manner, the performance evaluation of the first solution is implemented on a UE side, and the first evaluation mode is determined by the UE, for example, by means of a protocol agreement, or based on a first evaluation mode determining rule preconfigured by a network.
Manner 5: As shown in FIG. 4C, in this manner, the performance evaluation of the first solution is implemented on a network side, and the first condition is reported by the UE to a network device, for example, by means of reporting current first condition information through an uplink message in an initial access, UE capability reporting, UCI, an RRC message, etc.
Manner 6: In this manner, the performance evaluation of the first solution is implemented on a network side, and the first condition is determined by a network device, for example, by means of a protocol agreement.
Manner 7: As shown in FIG. 4D, in this manner, the performance evaluation of the first solution is implemented on a network side, and the UE reports the first evaluation mode used to a network device, for example, by means of an uplink message in an initial access, UE capability reporting, UCI, an RRC message, etc.
Manner 8: In this manner, the performance evaluation of the first solution is implemented on a network side, and the first evaluation mode is determined by a network device, for example, by means of a protocol agreement.

FIG. 5 is a schematic flowchart of a method for performance evaluation according to another embodiment of the present disclosure. This method can optionally be applied to the system shown in FIG. 1, but is not limited thereto. The method includes at least some of the following contents.

S510: A second device transmits third indication information to a first device, where the third indication information is used to enable the first device to evaluate performance of a first solution under a first condition by using a first evaluation mode corresponding to the first condition.

Exemplarily, the third indication information may be used by the first device to determine whether the first condition is met, or may be used by the first device to determine the first evaluation mode.

In some embodiments, the third indication information indicates the first condition or indicates that the first condition is met. Specifically, the third indication information may include the first indication information in the embodiments above. Optionally, the second device may transmit third indication information to the first device to indicate specific content of the first condition corresponding to the first evaluation mode, such that the first device itself may determine whether the first condition is met to use the first evaluation mode under the first condition. Alternatively, the second device may determine whether a second condition is met. If the second device determines that the first condition is met, the second device transmits the first indication information to the first device, such that the first device uses the first evaluation mode under the currently met first condition.

In some embodiments, the third indication information indicates a first rule, and the first rule is used by the first device to determine the first condition.

In some embodiments, the third indication information indicates the first evaluation mode. Specifically, the third indication information may include the second indication information in the embodiments above. Optionally, the second indication information may indicate the first evaluation mode currently in use, that is, the second device may transmit the second indication information to the first device under the first condition, such that the terminal device uses the first evaluation mode. Alternatively, the second indication information may indicate the first evaluation mode corresponding to the first condition, and the first device may use the first evaluation mode under the first condition.

In some implementations, the third indication information indicates a second rule, and the second rule is used by the first device to determine the first evaluation mode.

In some embodiments, if the first device is a terminal device and the second device is a network device, the third indication information may be carried by a broadcast message, an MIB, an SIB, a downlink message in an initial access, DCI, a MAC CE, an RRC message, or an RRC reconfiguration message.

In some embodiments, if the first device is a network device and the second device is a terminal device, the third indication information may be carried by an uplink message in an initial access, UE capability reporting, UCI, or an RRC message.

It can be seen that according to the technical solution of the embodiment of the present disclosure, the first device evaluates the first solution under the first condition by using the first evaluation mode corresponding to the first condition. Different first conditions correspond to different first evaluation modes, and different first conditions are used to confirm adjustment and update of different first evaluation modes. This can avoid unnecessary evaluation overhead, such as resource overhead and evaluation time overhead, under different conditions that affect the evaluation of the first solution, while also ensuring that evaluation effects are valid and accurate. When more evaluation overhead is required under the first condition, the corresponding first evaluation mode is use to ensure validity of the evaluation. When, under the first condition, excessive evaluation overhead is not required, the corresponding first evaluation mode is used to avoid unnecessary evaluation overheads.

FIG. 6 is a schematic block diagram of a first device 600 according to an embodiment of the present disclosure. The first device 600 may include a first processing module 610.

The first processing module 610 is configured to evaluate, under a first condition, performance of a first solution by using a first evaluation mode corresponding to the first condition.

In one implementation, the first solution includes an artificial intelligence-based wireless communication solution.

In one implementation, the first solution includes at least one of the following: a CSI feedback solution; a CSI prediction solution; a beam management solution; a beam prediction solution; a positioning solution; a channel estimation solution; a mobility management solution; a resource management solution; an encoding/decoding solution; and a modulation/demodulation solution.

In one implementation, the first condition is related to at least one of:
A scenario environment of the first solution;
Configuration information of a first measurement behavior, where the first measurement behavior is used to evaluate the first solution;
A measurement occasion corresponding to the first measurement behavior;
A movement speed of a terminal device related to the first solution;
A processing capability of the first device;
Single evaluation accuracy of the first solution by the first device; and
An evaluation type of the first solution.

In one implementation, the first condition corresponds to first information of the first evaluation mode, the first information including at least one of: an evaluation type; a size of an evaluation window; a number of evaluation samples; and a length of an evaluation time.

In one implementation, the first information of the first evaluation mode is obtained by adjusting first information of a second evaluation mode based on the first condition.

In one implementation, the first information of the first evaluation mode is obtained by adjusting the first information of the second evaluation mode based on a scaling factor or a correction coefficient corresponding to the first condition.

In one implementation, as shown in FIG. 7, the first device 600 further includes a first communication module 710 configured to perform the following operation.

Receive first indication information from a second device, where the first indication information indicates the first condition or indicates that the first condition is met.

In one implementation, the first processing module 610 is further configured to perform the following operation.

Determine the first condition based on a first rule.

In one implementation, a first terminal device is included, and the first rule is pre-agreed, or is configured by a first network device.

In one implementation, a first network device is included, and the first rule is pre-agreed.

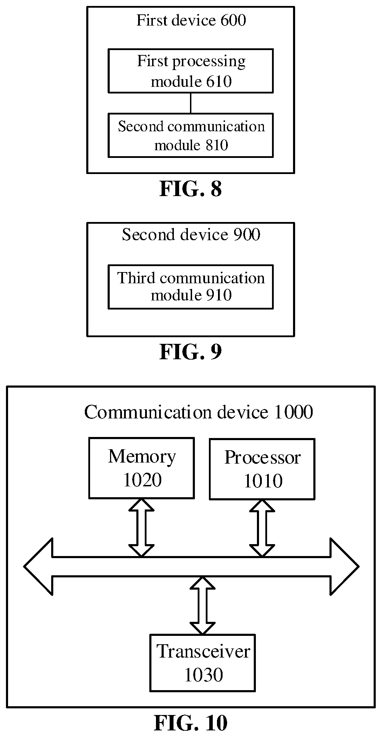

In one implementation, as shown in FIG. 8, the first device further includes a second communication module 810 configured to perform the following operation.

Receive second indication information from the second device, where the second indication information indicates the first evaluation mode.

In one implementation, the first processing module 610 is further configured to perform the following operation.

Determine the first evaluation mode based on a second rule.

In one implementation, a second terminal device is included, and the second rule is pre-agreed, or is configured by a second network device.

In one implementation, a second network device is included, and the second rule is pre-agreed.

The first device 600 in the embodiment of the present disclosure can implement the corresponding functions of the first device in the method embodiments described above. The process, function, implementation, and beneficial effect corresponding to each module (submodule, unit, component, etc.) in the first device 600 can be found in the corresponding description in the above method embodiments, and will not be repeated here. It should be noted that the functions described with respect to each module (submodule, unit, component, etc.) in the first device 600 according to the embodiment of the present disclosure may be implemented by different modules (submodules, units, components, etc.), or may be implemented by the same module (submodule, unit, component, etc.).

FIG. 9 is a schematic block diagram of a second device 900 according to an embodiment of the present disclosure. The second device 900 may include a third communication module 910.

The third communication module 910 is configured to transmit third indication information to a first device, where the third indication information is used to enable the first device to evaluate performance of a first solution under a first condition by using a first evaluation mode corresponding to the first condition.

In one implementation, the third indication information indicates the first condition or indicates that the first condition is met.

In one implementation, the third indication information indicates a first rule, the first rule being used by the first device to determine the first condition.

In one implementation, the third indication information indicates the first evaluation mode.

In one implementation, the third indication information indicates a second rule, the second rule being used by the first device to determine the first evaluation mode.

The second device 900 in the embodiment of the present disclosure can implement the corresponding functions of the second device in the method embodiments described above. The process, function, implementation, and beneficial effect corresponding to each module (submodule, unit, component, etc.) in the second device 900 can be found in the corresponding description in the above method embodiments, and will not be repeated here. It should be noted that the functions described with respect to each module (submodule, unit, component, etc.) in the second device 900 according to the embodiment of the present disclosure may be implemented by different modules (submodules, units, components, etc.), or may be implemented by the same module (submodule, unit, component, etc.).

FIG. 10 is a schematic structural diagram of a communication device 1000 according to an embodiment of the present disclosure. The communication device 1000 includes a processor 1010. The processor 1010 can invoke and run a computer program from a memory, to cause the communication device 1000 to implement the method in the embodiments of the present disclosure.

In one implementation, the communication device 1000 may further include a memory 1020. The processor 1010 may invoke and run a computer program from the memory 1020, to cause the communication device 1000 to implement the method in the embodiments of the present disclosure.

The memory 1020 may be one separate component independent of the processor 1010, or may be integrated in the processor 1010.

In one implementation, the communication device 1000 may further include a transceiver 1030. The processor 1010 may control the transceiver 1030 to perform communication with other devices. Specifically, the transceiver may transmit information or data to other devices, or receive information or data transmitted by other devices.

The transceiver 1030 may include a transmitter and a receiver. The transceiver 1030 may further include an antenna, and the number of antennas may be one or more.

In one implementation, the communication device 1000 may be the first device in the embodiments of the present disclosure, and the communication device 1000 may implement the corresponding procedures implemented by the first device in the respective methods of the embodiments of the present disclosure, which will not be repeated here for the sake of brevity.

In one implementation, the communication device 1000 may be the second device in the embodiments of the present disclosure, and the communication device 1000 may implement corresponding procedures implemented by the second device in the respective methods of the embodiments of the present disclosure, which will not be repeated here for the sake of brevity.

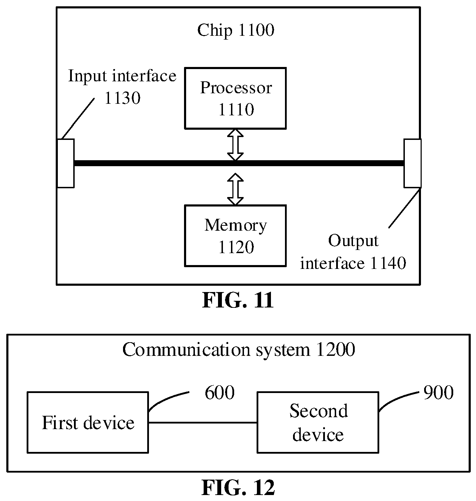

FIG. 11 is a schematic structural diagram of a chip 1100 according to an embodiment of the present disclosure. The chip 1100 includes a processor 1110, and the processor 1110 may invoke and run a computer program from a memory, so as to implement the method in the embodiments of the present disclosure.

In one implementation, the chip 1100 may further include a memory 1120. The processor 1110 can invoke and run a computer program from the memory 1120, so as to implement the method performed by the terminal device or network device in the embodiments of the present disclosure.

The memory 1120 may be one separate component independent of the processor 1110, or may be integrated in the processor 1110.

In one implementation, the chip 1100 may further include an input interface 1130. The processor 1110 may control the input interface 1130 to perform communication with other devices or chips. Specifically, the input interface may acquire information or data transmitted by other devices or chips.

In one implementation, the chip 1100 may further include an output interface 1140. The processor 1110 may control the output interface 1140 to perform communication with other devices or chips. Specifically, the output interface may output information or data to other devices or chips.

In one implementation, the chip is used in the first device in the embodiments of the present disclosure, and the chip may implement corresponding procedures implemented by the first device in the respective methods of the embodiments of the present disclosure. For the sake of brevity, details are not described again here.

In one implementation, the chip is used in the second device in the embodiments of the present disclosure, and the chip may implement corresponding procedures implemented by the second device in the respective methods of the embodiments of the present disclosure. For the sake of brevity, details are not described again here.

The chips used in the first device and the second device may be identical chips or different chips.

It should be understood that the chip mentioned in the embodiment of the present disclosure may also be referred to as a system-level chip, a system chip, a chip system, or a system-on-chip chip, or the like.

The processor mentioned above may be a general-purpose processor, a Digital Signal Processor (DSP), a Field-Programmable Gate Array (FPGA), an Application-Specific Integrated Circuit (ASIC), or another programmable logic device, a transistor logic device, a discrete hardware component, or the like. The general-purpose processor mentioned above may be a microprocessor, any conventional processor, or the like.

The memory mentioned above may be a volatile memory or a nonvolatile memory, or may include both volatile and nonvolatile memories. The non-volatile memory may be a read-only memory (ROM), a programmable read-only memory (programmable ROM, PROM), an erasable programmable read-only memory (erasable PROM, EPROM), an electrically erasable programmable read-only memory (electrically EPROM, EEPROM) or a flash memory. The volatile memory may be a Random Access Memory (RAM).

It should be understood that the described memory is illustrative but not restrictive. For example, the memory in the embodiments of the present disclosure may also be a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synch link DRAM, SLDRAM), a direct memory bus random access memory (Direct Rambus RAM, DR RAM), or the like. That is, the memory in the embodiments of the present disclosure is intended to include, but is not limited to, the foregoing and any other suitable type of memory.

FIG. 12 is a schematic block diagram of a communication system 1200 according to an embodiment of the present disclosure. The communication system 1200 includes a first device 600 and a second device 900.

The first device 600 is configured to evaluate performance of a first solution under a first condition by using a first evaluation mode corresponding to the first condition.

The second device 900 is configured to transmit third indication information to the first device 600. The third indication information is used to enable the first device 600 to evaluate the performance of the first solution under the first condition by using the first evaluation mode corresponding to the first condition.

The first device 600 may be configured to implement the corresponding functions implemented by the first device in the described methods, and the second device 900 may be configured to implement the corresponding functions implemented by the second device in the described methods. For conciseness, further details are omitted here.

The above embodiment may be implemented in whole or in part by software, hardware, firmware, or any combination thereof. When implemented by using software, the above embodiment may be implemented as a whole or in part in the form of a computer program product. The computer program product includes one or more computer instructions. When the computer program instructions are loaded and executed on a computer, the procedures or functions according to the embodiments of the present disclosure are completely or partially generated. The computer may be a general-purpose computer, a special-purpose computer, a computer network, or other programmable apparatuses. The computer instructions may be stored in a computer-readable storage medium, or transmitted from one computer-readable storage medium to another computer-readable storage medium. For example, the computer instructions may be transmitted from a website, a computer, a server, or a data center to another website site, computer, server, or data center by wired (e.g., coaxial cable, optical fiber, or Digital Subscriber Line (DSL)) or wireless (e.g., infrared, wireless, microwave, etc.) means. The computer-readable storage medium may be any available medium that can be accessed by a computer, or a data storage device such as a server or a data center that includes one or more available media. The available media may be magnetic media (e.g., a floppy disk, a hard disk, or a magnetic tape), optical media (e.g., a DVD), semiconductor media (e.g., a Solid State Disk (SSD)), etc.

It should be understood that in various embodiments of the present disclosure, the size of the sequence numbers of various processes described above does not imply the order of execution, and the order of execution of various processes should be determined by the functions and internal logic thereof, and should not constitute any limitation on the implementation process of the embodiments of the present disclosure.

It can be clearly understood by a person skilled in the art that for the convenience and brevity of the description, reference may be made to the corresponding processes in the foregoing method embodiments for the specific working process of the systems, apparatuses and units described above, which will not be repeated here.

The above is merely a detailed implementation of the present disclosure, but the scope of protection of the present disclosure is not limited thereto. Any person skilled in the art can easily conceive of changes or substitutions within the technical scope disclosed in the present disclosure, and all of the changes or substitutions should be covered by the scope of protection of the present disclosure. Therefore, the scope of protection of the present disclosure should be defined by the scope of protection of the claims.

## Claims

1. A method for performance evaluation, comprising:
evaluating, by a first device, under a first condition, performance of a first solution by using a first evaluation mode corresponding to the first condition.

2. The method according to claim 1, wherein the first solution comprises an artificial intelligence-based wireless communication solution.

3. The method according to claim 1 or 2, wherein the first solution comprises at least one of:
a Channel State Information (CSI) feedback solution;
a CSI prediction solution;
a beam management solution;
a beam prediction solution;
a positioning solution;
a channel estimation solution;
a mobility management solution;
a resource management solution;
an encoding and decoding solution; and
a modulation and demodulation solution.

4. The method according to any one of claims 1 to 3, wherein the first condition is related to at least one of:
a scenario environment of the first solution;
configuration information of a first measurement behavior, wherein the first measurement behavior is used to evaluate the first solution;
a measurement occasion corresponding to the first measurement behavior;
a movement speed of a terminal device related to the first solution;
a processing capability of the first device;
single evaluation accuracy of the first solution by the first device; and
an evaluation type of the first solution.

5. The method according to any one of claims 1 to 4, wherein the first condition corresponds to first information of the first evaluation mode, the first information comprising at least one of:
an evaluation type;
a size of an evaluation window;
a number of evaluation samples; and
a length of an evaluation time.

6. The method according to any one of claims 1 to 5, wherein first information of the first evaluation mode is obtained by adjusting first information of a second evaluation mode based on the first condition.

7. The method according to claim 6, wherein the first information of the first evaluation mode is obtained by adjusting the first information of the second evaluation mode based on a scaling factor or a correction coefficient corresponding to the first condition.

8. The method according to any one of claims 1 to 7, further comprising:
receiving, by the first device, first indication information from a second device, wherein the first indication information indicates the first condition or indicates that the first condition is met.

9. The method according to any one of claims 1 to 7, further comprising:
determining, by the first device, the first condition based on a first rule.

10. The method according to claim 9, wherein the first device comprises a first terminal device, and the first rule is pre-agreed, or is configured by a first network device.

11. The method according to claim 9, wherein the first device comprises a first network device, and the first rule is pre-agreed.

12. The method according to any one of claims 1 to 11, further comprising:
receiving, by the first device, second indication information from a second device, wherein the second indication information indicates the first evaluation mode.

13. The method according to any one of claims 1 to 11, further comprising:
determining, by the first device, the first evaluation mode based on a second rule.

14. The method according to claim 13, wherein the first device comprises a second terminal device, and the second rule is pre-agreed, or is configured by a second network device.

15. The method according to claim 13, wherein the first device comprises a second network device, and the second rule is pre-agreed.

16. A method for performance evaluation, comprising:
transmitting, by a second device, third indication information to a first device, wherein the third indication information is used to enable the first device to evaluate performance of a first solution under a first condition by using a first evaluation mode corresponding to the first condition.

17. The method according to claim 16, wherein the third indication information indicates the first condition or indicates that the first condition is met.

18. The method according to claim 16, wherein the third indication information indicates a first rule, the first rule being used by the first device to determine the first condition.

19. The method according to any one of claims 16 to 18, wherein the third indication information indicates the first evaluation mode.

20. The method according to any one of claims 16 to 18, wherein the third indication information indicates a second rule, the second rule being used by the first device to determine the first evaluation mode.

21. A first device, comprising:
a first processing module, configured to evaluate, under a first condition, performance of a first solution by using a first evaluation mode corresponding to the first condition.

22. The first device according to claim 21, wherein the first solution comprises an artificial intelligence-based wireless communication solution.

23. The first device according to claim 21 or 22, wherein the first solution comprises at least one of:
a Channel State Information (CSI) feedback solution;
a CSI prediction solution;
a beam management solution;
a beam prediction solution;
a positioning solution;
a channel estimation solution;
a mobility management solution;
a resource management solution;
an encoding and decoding solution; and
a modulation and demodulation solution.

24. The first device according to any one of claims 21 to 23, wherein the first condition is related to at least one of:
a scenario environment of the first solution;
configuration information of a first measurement behavior, wherein the first measurement behavior is used to evaluate the first solution;
a measurement occasion corresponding to the first measurement behavior;
a movement speed of a terminal device related to the first solution;
a processing capability of the first device;
single evaluation accuracy of the first solution by the first device; and
an evaluation type of the first solution.

25. The first device according to any one of claims 21 to 24, wherein the first condition corresponds to first information of the first evaluation mode, the first information comprising at least one of:
an evaluation type;
a size of an evaluation window;
a number of evaluation samples; and
a length of an evaluation time.

26. The first device according to claims 21 to 25, wherein first information of the first evaluation mode is obtained by adjusting first information of a second evaluation mode based on the first condition.

27. The first device according to claim 26, wherein the first information of the first evaluation mode is obtained by adjusting the first information of the second evaluation mode based on a scaling factor or a correction coefficient corresponding to the first condition.

28. The first device according to any one of claims 21 to 27, wherein the first device further comprises a first communication module, the first communication module being configured to:
receive first indication information from a second device, wherein the first indication information indicates the first condition or indicates that the first condition is met.

29. The first device according to any one of claims 21 to 27, wherein the first processing module is further configured to:
determine the first condition based on a first rule.

30. The first device according to claim 29, wherein the first device comprises a first terminal device, and the first rule is pre-agreed, or is configured by a first network device.

31. The first device according to claim 29, wherein the first device comprises a first network device, and the first rule is pre-agreed.

32. The first device according to any one of claims 21 to 31, wherein the first device further comprises a second communication module, the second communication module being configured to:
receive second indication information from a second device, wherein the second indication information indicates the first evaluation mode.

33. The first device according to any one of claims 21 to 31, wherein the first processing module is further configured to:
determine the first evaluation mode based on a second rule.

34. The first device according to claim 33, comprising: a second terminal device, wherein the second rule is pre-agreed, or is configured by a second network device.

35. The first device according to claim 33, comprising: a second network device, wherein the second rule is pre-agreed.

36. A second device, comprising:
a third communication module, configured to transmit third indication information to a first device, wherein the third indication information is used to enable the first device to evaluate performance of a first solution under a first condition by using a first evaluation mode corresponding to the first condition.

37. The second device according to claim 36, wherein the third indication information indicates the first condition or indicates that the first condition is met.

38. The second device according to claim 36, wherein the third indication information indicates a first rule, the first rule being used by the first device to determine the first condition.

39. The second device according to any one of claims 36 to 38, wherein the third indication information indicates the first evaluation mode.

40. The second device according to any one of claims 36 to 38, wherein the third indication information indicates a second rule, the second rule being used by the first device to determine the first evaluation mode.

41. A first device, comprising: a transceiver, a processor and a memory, the memory being configured to store a computer program, the transceiver being configured to communicate with other devices, and the processor being configured to invoke and run the computer program stored in the memory, to cause the first device to perform the method according to any one of claims 1 to 15.

42. A second device, comprising: a transceiver, a processor and a memory, the memory being configured to store a computer program, the transceiver being configured to communicate with other devices, and the processor being configured to invoke and run the computer program stored in the memory, to cause the second device to perform the method according to any one of claims 16 to 20.

43. A chip, comprising: a processor, configured to invoke and run a computer program in a memory, to cause a device having the chip installed therein to perform the method according to any one of claims 1 to 15.

44. A chip, comprising: a processor, configured to invoke and run a computer program in a memory, to cause a device having the chip installed therein to perform the method according to any one of claims 16 to 20.

45. A computer-readable storage medium, configured to store a computer program, which, when executed by a device, causes the device to perform the method according to any one of claims 1 to 15.

46. A computer-readable storage medium, configured to store a computer program, which, when executed by a device, causes the device to perform the method according to any one of claims 16 to 20.

47. A computer program product, comprising: computer program instructions, the computer program instructions causing a computer to perform the method according to any one of claims 1 to 15.

48. A computer program product, comprising: computer program instructions, the computer program instructions causing a computer to perform the method according to any one of claims 16 to 20.

49. A computer program causing a computer to perform the method according to any one of claims 1 to 15.

50. A computer program causing a computer to perform the method according to any one of claims 16 to 20.

51. A communication system, comprising:
a first device, configured to perform the method according to any one of claims 1 to 15; and
a second device, configured to perform the method according to any one of claims 6 to 20.
